(19)

Europäisches
Patentamt
European
Patent Office
Office européen
des brevets

(11) **EP 2 602 463 A1**

(12) **EUROPEAN PATENT APPLICATION**
published in accordance with Art. 153(4) EPC

(43) Date of publication:
**12.06.2013  Bulletin 2013/24**

(21) Application number: **11814340.3**

(22) Date of filing: **08.04.2011**

(51) Int Cl.:
**F02D 41/14** $^{(2006.01)}$ **F02D 29/00** $^{(2006.01)}$
**F02D 41/04** $^{(2006.01)}$ **F16H 61/02** $^{(2006.01)}$
**F16H 61/662** $^{(2006.01)}$ **F16H 63/50** $^{(2006.01)}$

(86) International application number:
**PCT/JP2011/058884**

(87) International publication number:
**WO 2012/017709 (09.02.2012 Gazette 2012/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **04.08.2010  JP 2010175797**

(71) Applicant: **Yamaha Hatsudoki Kabushiki Kaisha
Iwata-shi, Shizuoka 438-8501 (JP)**

(72) Inventors:
 • **YAMAMOTO, Ryuji**
  **Iwata-shi**
  **Shizuoka 438-8501 (JP)**
 • **ARAI, Katsuhiro**
  **Iwata-shi**
  **Shizuoka 438-8501 (JP)**

 • **ISHIOKA, Kazutoshi**
  **Iwata-shi**
  **Shizuoka 438-8501 (JP)**
 • **AOKI, Hiroyuki**
  **Iwata-shi**
  **Shizuoka 438-8501 (JP)**
 • **SEKIGUCHI, Naoki**
  **Iwata-shi**
  **Shizuoka 438-8501 (JP)**

(74) Representative: **Grünecker, Kinkeldey,
Stockmair & Schwanhäusser
Leopoldstrasse 4
80802 München (DE)**

(54) **VEHICLE AND DRIVE CONTROL DEVICE FOR VEHICLE**

(57)    To provide a drive control device for a vehicle capable of driving an engine at a desired fuel consumption. The drive control device has a map which correlates each engine rotation speed with an evaluation value indicating a fuel consumption in driving the engine at that engine rotation speed. The drive control device calculates a targeted evaluation value Etg between a first evaluation value Elim1 indicating a fuel consumption in driving the engine in the fuel economy mode and a second evaluation value Elim2 indicating a fuel consumption in driving the engine in the acceleration responsive mode. Further, the drive control device calculates a target engine rotation speed Stg correlated to the targeted evaluation value Etg, with reference to the map.

FIG.8

EP 2 602 463 A1

**Description**

Technical Field

The present invention relates to a drive control device for a vehicle which controls an engine and a continuously variable transmission.

Background Art

Conventionally, there has been available a vehicle that electronically controls the opening of a throttle valve and the transmission ratio of a continuously variable transmission by utilizing an actuator. Some of such vehicles control the transmission ratio of a continuously variable transmission such that the actual engine rotation speed becomes a target engine rotation speed.

A control device for a vehicle disclosed in Patent Document 1 mentioned below has, as its control modes, a mode for focusing on fuel economy (hereinafter referred to as a fuel economy mode) and a mode for focusing on acceleration response performance of a vehicle (hereinafter referred to as an acceleration responsive mode). A target engine rotation speed is set in the fuel economy mode so as to achieve the optimal fuel consumption, while a higher target engine rotation speed than that in the fuel economy mode is set in the acceleration responsive mode so as to achieve the maximum vehicle acceleration response (in Patent Document 1, the acceleration response is referred to a driving force of an engine).

Patent Document 1 further discloses a control mode where a target engine rotation speed is set between a target engine rotation speed set in the fuel economy mode and a target engine rotation speed set in the acceleration responsive mode (hereinafter referred to as an intermediate mode). In the intermediate mode, a calculation formula which defines a relation between target engine rotation speed and acceleration request (specifically, a change speed of a throttle opening degree degree) is used, and thereby a target engine rotation speed in response to an acceleration request is calculated.

Citation List

Patent Literature

Patent Literature 1: Japanese Patent No. 2898034

Summary of Invention

Technical Problem

According to the control disclosed in Patent document 1, a target engine rotation speed is calculated based directly on an acceleration request, and thus an acceleration response and a fuel consumption to be achieved when the actual engine rotation speed reaches a target engine rotation speed is not involved in the calculation for the target engine rotation speed. Thus, according to the control disclosed in Patent Document 1, it is difficult to obtain an acceleration response and fuel consumption well matching a drive state of vehicle and a driver's acceleration request.

The present invention has been conceived in view of the above, and an object thereof is to provide a drive control device capable of driving an engine at a state of a desired acceleration response and a desired fuel consumption, and is to provide a vehicle having such a drive control device.

Solution to Problem

In order to achieve the above described object, a drive control device according to the present invention is a device for controlling an engine and a transmission ratio of a continuously variable transmission so that an operation state of the engine becomes a target operation state. The drive control device includes a storage unit storing in advance data which correlates each operation state of the engine with an evaluation value indicating a fuel consumption in driving the engine at each operation state; a target evaluation value calculation section which calculates a targeted evaluation value between a first evaluation value indicating a fuel consumption in driving the engine in a fuel economy mode that is one of control modes of the drive control device and a second evaluation value indicating a fuel consumption in driving the engine in an acceleration responsive mode that is another control mode; and a target operation state calculation section which calculates, as the target operation state, an operation state correlated to the targeted evaluation value, referring to the data stored in the storage unit.

In order to achieve the above described object, another drive control device according to the present invention is a device for controlling an engine and a transmission ratio of a continuously variable transmission so that an operation state of the engine becomes a target operation state. The drive control device includes a storage unit storing in advance data which correlates each operation state of the engine with an evaluation value indicating an acceleration response in driving the engine at each operation state; a target evaluation value calculation section which calculates a targeted evaluation value between a first evaluation value indicating an acceleration response in driving the engine in a fuel economy mode that is one of control mode of the drive control device and a second evaluation value indicating an acceleration response in driving the engine in an acceleration responsive mode that is another control mode; and a target operation state calculation section which calculates, as the target operation state, an operation state correlated to the targeted evaluation value, referring to the data stored in the storage unit.

In order to achieve the above described object, a vehicle according to the present invention has the above described drive control device.

According to the present invention, because a targeted evaluation value is calculated and then a target operation state is calculated based on the targeted evaluation value, it is possible to drive the engine at a desired fuel consumption or acceleration response. Note that an operation state may not be directly correlated to an evaluation value in the data stored in the storage unit. That is, an operation state may be correlated to an evaluation value via another parameter.

Brief Description of Drawings

FIG. 1 is a side view of a two-wheeled motor vehicle having a drive control device according to an embodiment of the present invention;
FIG. 2 schematically shows a drivetrain mechanism of the two-wheeled motor vehicle;
FIG. 3 is a functional block diagram of a control unit of the drive control device;
FIG. 4 is for an explanation of a summary of control executed by the control unit;
FIG. 5 is for an explanation of a summary of processing executed by a target engine rotation speed calculation section of the control unit;
FIG. 6 is a functional block diagram of the target engine rotation speed calculation section;
FIG. 7 shows an example of an optimal fuel consumption map stored in a storage unit;
FIG. 8 is for an explanation of a fuel consumption evaluation map stored in the storage unit;
FIG. 9 is for an explanation of a relationship between a fuel consumption and an engine rotation speed, a relationship between a fuel consumption evaluation value and a fuel consumption and a relationship between a fuel consumption evaluation value and an engine rotation speed;
FIG. 10 shows an example of an optimal acceleration response map stored in the storage unit;
FIG. 11 shows an example of change of an acceleration request-related value;
FIG. 12 is for an explanation of a relationship between the acceleration request-related value and the fuel consumption evaluation value;
FIG. 13 is for an explanation of a relationship between the engine rotation speed and the acceleration request-related value;
FIG. 14 is a time chart explaining change of the accelerator opening degree, the target engine power, the acceleration request-related value, the engine rotation speed, and a rear wheel driving force, and
FIG. 15 is for an explanation of an acceleration response evaluation map stored in the storage unit.

Description of Embodiments

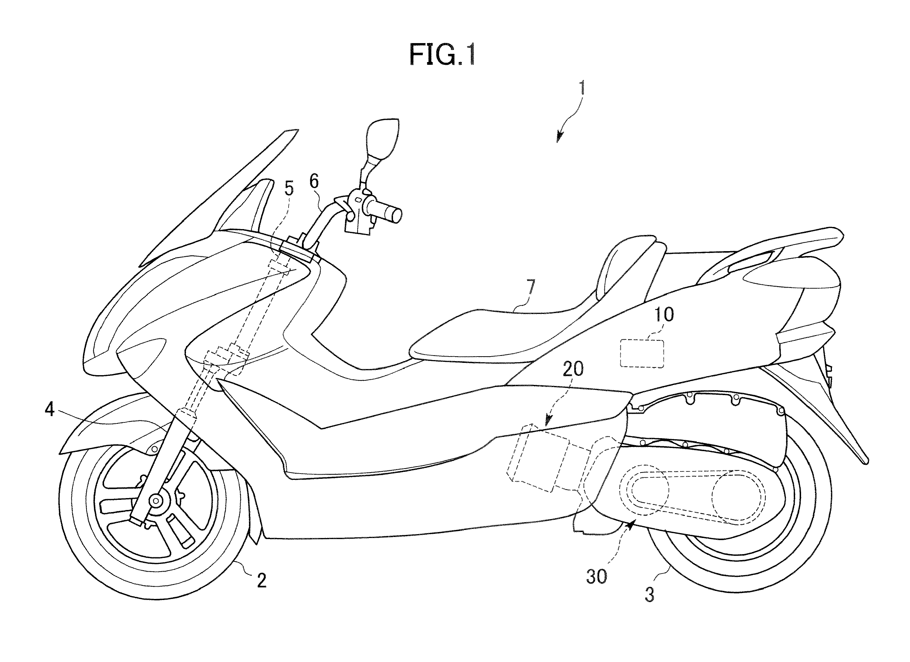

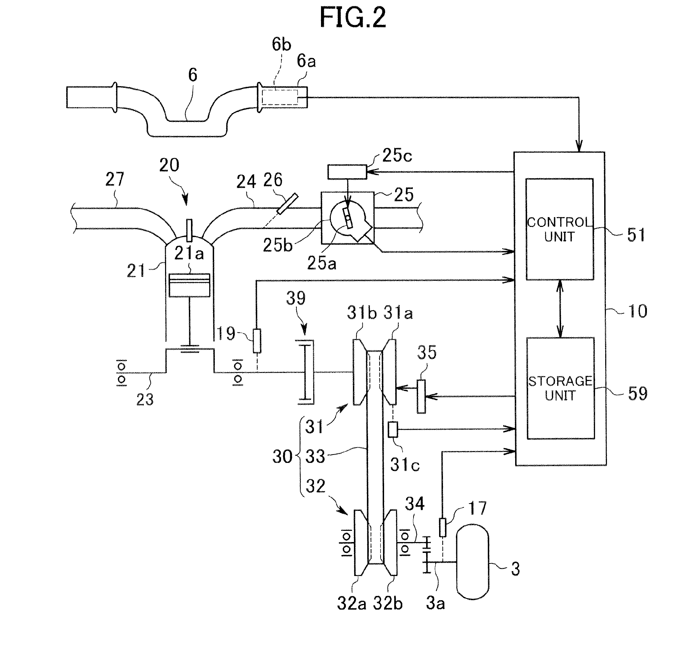

In the following, an embodiment of the present invention will be described with reference to the accompanying drawings. FIG. 1 is a side view of a two-wheeled motor vehicle 1 having a drive control device 10 that is an example of an embodiment of the present invention, and FIG. 2 schematically shows a drivetrain mechanism of the two-wheeled motor vehicle 1.

As shown in FIG. 1 or 2, the two-wheeled motor vehicle 1 includes a front wheel 2 and a rear wheel 3. The two-wheeled motor vehicle 1 further includes an engine 20, a continuously variable transmission 30 which reduces the rotation speed of the engine 20 and transmits it to the rear wheel 3, and a drive control device 10 which controls the engine 20 and the transmission ratio of the continuously variable transmission 30.

As shown in FIG. 1, the front wheel 2 is supported at the lower end of the front suspension 4. A steering shaft 5 is provided to the upper portion of the front suspension 4, being rotatably supported by the vehicle body frame (not shown). A steering bar 6 is provided above the steering shaft 5. The steering bar 6, the steering shaft 5, the front suspension 4, and the front wheel 2 can integrally turn to the left and right, and the front wheel 2 can be steered by operating the steering bar 6. As shown in FIG. 2, an accelerator grip 6a for operation by a driver is provided on the right portion of the steering bar 6.

As shown in Fig. 1, a seat 7 is mounted to the rear from the steering bar 6 so that a driver can sit thereon while straddling. The engine 20 is mounted below the seat 7. As shown in FIG. 2, the engine 20 includes a cylinder 21, and the cylinder 21 includes an intake pipe 24 connected thereto. The intake pipe 24 is provided with a fuel supply device 26 for injecting fuel into the intake pipe 24. The fuel supply device 26 is an electronically controlled fuel injection device.

The intake pipe 24 has a throttle body 25 connected thereto, the throttle body 25 having a throttle valve 25a provided inside thereof. The throttle valve 25a adjusts the amount of air flowing into the cylinder 21 through the throttle body 25. The throttle valve 25a is an electronically controlled valve, and the throttle body 25 has a valve actuator 25c for opening and closing the throttle valve 25a while receiving power from the drive control device 10. The drive control device 10 controls the power to supply to the valve actuator 25c to thereby control the opening degree of the throttle valve 25a (hereinafter referred to as a throttle opening degree).

A piston 21a arranged inside the cylinder 21 is linked to a crank shaft 23 inside the crank case. The cylinder 21 further has an exhaust pipe 27 connected thereto for exhausting exhaust gas generated through combustion of fuel.

The continuously variable transmission 30 is a belt-type transmission, and includes a drive pulley 31, a driven pulley 32 to which rotation is transmitted from the drive pulley 31, and a belt 33 wound around the drive pulley 31 and the driven pulley 32 for transmitting the rotation of the drive pulley 31 to the driven pulley 32.

In the example shown in FIG. 2, the rotation of the crank shaft 23 is transmitted to the movable pulley 31 via a clutch 39. The clutch 39 is, for example, an automatic clutch (for example, a centrifugal clutch) that is engaged or disengaged without a clutch operation by a driver.

The drive pulley 31 includes a movable sheave 31a that is movable in the rotation axial direction and a stationary sheave 31b of which movement in the axial direction is restricted. The driven pulley 32 as well has a movable sheave 32a that is movable in the rotation axial direction and a stationary sheave 32b of which movement in the axial direction is restricted. The movable sheave 32a is pressed onto the stationary sheave 32b by a spring (not shown).

When the movable sheave 31a and the stationary sheave 31b are positioned closest to each other and the movable sheave 32a and the stationary sheave 32b are positioned farthest apart from each other, the transmission ratio is set to TOP (minimum reduction ratio). On the contrary, when the movable sheave 31a and the stationary sheave 31b are positioned farthest apart from each other and the movable sheave 32a and the stationary sheave 32b are positioned closest to each other, the transmission ratio is set to LOW (maximum reduction ratio). The movable sheave 31a and the movable sheave 32a move in the axial direction, to thereby change the transmission ratio of the continuously variable transmission 30 in the range between TOP and LOW.

The continuously variable transmission 30 is an electronically controlled transmission, and thus has a sheave actuator 35 for moving the movable sheave 31a in the axial direction. The drive control device 10 activates the sheave actuator 35 to move the movable sheave 31a in the axial direction, to thereby control the transmission ratio of the continuously variable transmission 30.

The driven pulley 32 is mounted on a driven shaft 34 that integrally rotates with the driven pulley 32. The driven shaft 34 is linked to the axle 3a of the real wheel 3 via a gear. With the above, the rotation of the driven shaft 34 is transmitted to the rear wheel 3.

A drivetrain mechanism from the engine 20 to the axle 3a of the rear wheal 3 is not limited to that shown in FIG. 2, and various modifications may be possible. For example, the clutch 39 may be provided downstream the continuously variable transmission 30. Further, a speed reduction mechanism may be mounted between the drive pulley 31 and the crank shaft 23.

Hereinafter, a sensor that is connected to the drive control device 10 will be described. The two-wheeled motor vehicle 1 includes an accelerator operation sensor 6b for detecting the amount of operation of the accelerator grip 6a by a driver (the amount of operation is the rotational position of the accelerator grip 6a, hereinafter the amount is referred to as an accelerator opening degree). The accelerator operation sensor 6b is, for example, a potentiometer, and outputs an electric signal in accordance with the accelerator opening degree. The drive control device 10 detects the accelerator opening degree set by a driver, based on an output signal from the accelerator operation sensor 6b.

The throttle body 25 includes a throttle opening degree sensor 25b for detecting the throttle opening degree. The throttle opening degree sensor 25b includes, for example, a potentiometer, and outputs an electric signal in accordance with the throttle opening degree. The drive control device 10 detects the throttle opening degree, based on an output signal from the throttle opening degree sensor 25b.

The continuously variable transmission 30 has a sensor for detecting the actual transmission ratio of the continuously variable transmission 30. Because the transmission ratio corresponds to the position of the movable sheave 31a, a sheave position sensor 31c for outputting an electric signal in accordance with the position of the movable sheave 31a is provided as a sensor for detecting the transmission ratio. The drive control device 10 detects the transmission ratio, based on an output signal of the sheave position sensor 31c.

The engine 20 has an engine rotation speed sensor 19. The engine rotation speed sensor 19 is a rotation speed sensor for outputting an electric signal in accordance with the rotation speed of the crank shaft 23. The drive control device 10 calculates the engine rotation speed, based on an output signal from the engine rotation speed sensor 19.

A vehicle speed sensor 17 is mounted on the axle 3a of the rear wheal 3. The drive control device 10 calculates the vehicle speed, based on an output signal from the vehicle speed sensor 17.

The drive control device 10 includes a storage unit 59 including a RAM (Random Access Memory) and a ROM (Read Only Memory) and a control unit 51 including a microprocessor for executing a program stored in the storage unit 59. The drive control device 10 includes a drive circuit (not shown) for supplying a driving power to the valve actuator 25c in response to a signal input from the control unit 51, and a drive circuit for supplying a driving power to the sheave actuator 35 in response to a signal input from the control unit 51.

Output signals from the engine rotation speed sensor 19, the vehicle speed sensor 17, the accelerator operation sensor 6b, the throttle opening degree sensor 25b, and the sheave position sensor 31c are input to the control unit 51 via an interface circuit (not shown). The control unit 51 detects the engine rotation speed or the like, based on these output signals from the respective sensors.

The control unit 51 sets a target operation state of the engine 20, and controls the engine 20 and the transmission ratio of the continuously variable transmission 30 such that the actual operation state becomes equal to the target operation state. Specifically, the control unit 51 sets a targeted engine rotation speed, and controls the transmission ratio of the continuously variable transmission 30 such that the actual engine rotation speed becomes equal to the targeted engine rotation speed. Further, the control unit 51 sets a targeted engine torque, and controls the engine 20 such that the actual engine torque becomes equal to the targeted engine torque. In the example described here, the control unit 51 controls the throttle opening degree in order to obtain a targeted engine torque. Alternatively, the control unit 51 may control ignition timing of the engine 20 and the injected amount of fuel injected by the fuel supply device 26 in order to obtain a targeted engine torque. Control by the control unit 51 will be described later in detail.

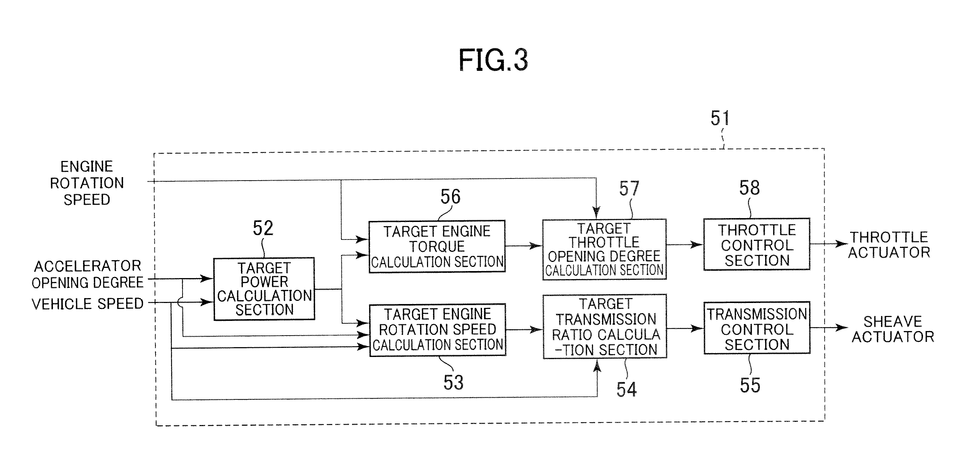

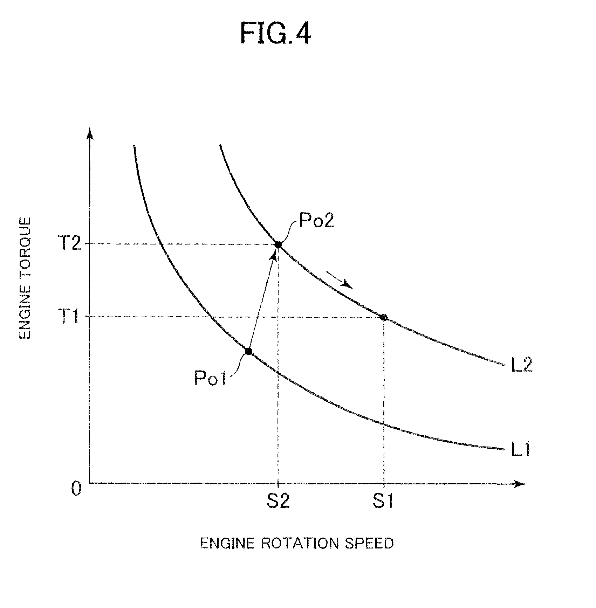

Hereinafter, control executed by the control unit 51 will be described. FIG. 3 is a block diagram showing a function of the control unit 51. FIG. 4 describes an outline of control executed by the control unit 51, in which the x-axis indicates the engine rotation speed, the y-axis indicates the engine torque, and L1 is an example of an equivalent power curve line indicating operation states (the engine rotation speed, the engine torque) where similar engine powers can be output. The point Po1 on the equivalent power curve line L1 indicates the current operation state. Line L2 is an example of an equivalent power curve line connecting operation states where a targeted engine power can be obtained.

As shown in FIG. 3, the control unit 51 includes, as its functions, a target power calculation section 52, a target engine rotation speed calculation section 53, a target transmission ratio calculation section 54, a transmission control section 55, a target engine torque calculation section 56, a target throttle opening degree calculation section 57, and a throttle control section 58.

The target power calculation section 52 calculates a targeted engine power (hereinafter referred to as a target engine power), based on the accelerator opening degree detected by the accelerator operation sensor 6b and the vehicle speed detected by the vehicle speed sensor 17.

In this example, a map for correlating the accelerator opening degree, the vehicle speed, and the targeted driving force of the rear wheel 3 (hereinafter referred to as a target driving force) is stored in advance in the storage unit 59. With reference to the map, the target power calculation section 52 calculates a target driving force correlated to the detected accelerator opening degree and vehicle speed. Then, the target power calculation section 52 calculates the target engine power, based on the target driving force. Specifically, the target power calculation section 52 multiplies the target driving force by the detected vehicle speed, to thereby calculate the target engine power.

The target engine rotation speed calculation section 53 calculates a targeted engine rotation speed (hereinafter referred to as a target engine rotation speed), based on the target engine power and the detected accelerator opening degree and vehicle speed. Refer to FIG. 4. The target engine rotation speed calculation section 53 calculates, as the target engine rotation speed, an engine rotation speed (for example, S1) associated with the detected accelerator opening degree and vehicle speed among the engine rotation speeds of the operation states indicated by the equivalent power curve line L2 indicating the target engine power. The target engine rotation speed calculation section 53 calculates the target engine rotation speed in a predetermined cycle. Processing by the target engine rotation speed calculation section 53 will be described later in detail.

The target transmission ratio calculation section 54 calculates a targeted transmission ratio (hereinafter referred to as a target transmission ratio), based on the target engine rotation speed and the vehicle speed. Specifically, the target transmission ratio calculation section 54 divides the target engine rotation speed by the detected vehicle speed, to thereby calculate the target transmission ratio.

The transmission control section 55 moves the sheave actuator 35 so that the actual transmission ratio becomes equal to the target transmission ratio. That is, the transmission control section 55 calculates the position of the movable sheave 31a corresponding to the target transmission ratio, and moves the sheave actuator 35 such that the position of the movable sheave 31a detected by the sheave position sensor 31c coincides with the position corresponding to the target transmission ratio. When the actual transmission ratio changes toward the target transmission ratio, the actual engine rotation speed increases or decreases toward the target engine rotation speed.

The target engine torque calculation section 56 calculates a targeted engine torque (hereinafter referred to as a target engine torque), based on the above-described target engine power and the current engine rotation speed detected by the engine rotation speed sensor 19. Specifically, the target engine torque calculation section 56 divides the target engine power by the current engine rotation speed, to thereby calculate the target engine torque.

Referring to FIG. 4, when the current engine rotation speed has not yet reached the target engine rotation speed (S1 in the example shown in FIG. 4) but remains at the engine rotation speed S2, the target engine torque calculation section 56 calculates, as the target engine torque, an engine torque T2 in an operation state with the engine rotation speed S2 (point Po2 in FIG. 4) among the operation states indicated by the equivalent power curve line L2. When the actual engine rotation speed is becoming closer to the target engine rotation speed, the target engine torque is becoming closer to the engine torque corresponding to the target engine rotation speed (T1 in FIG. 4). In the above, in a case in which the target engine torque calculated as described above is larger than the maximum engine torque that can be output at the current engine rotation speed (an engine torque that can be obtained with the maximum throttle opening degree), the maximum engine torque is set as the target engine torque. The target engine torque calculation section 56 as well calculates the target engine torque in a predetermined cycle, similar to the target engine rotation speed calculation section 53.

The target throttle opening degree calculation section 57 calculates a targeted throttle opening degree (hereinafter referred to as a target throttle opening degree), based on the target engine torque. In this example, a map for correlating the engine torque, the throttle opening degree, and the engine rotation speed

(hereinafter referred to as an engine torque map) is stored in advance in the storage unit 59. The target throttle opening degree calculation section 57 calculates, as the target throttle opening degree, a throttle opening degree correlated to the target engine torque and the current engine rotation speed, referring to the engine torque map.

The throttle control section 58 moves the valve actuator 25c such that the throttle opening degree detected by the throttle opening degree sensor 25b becomes equal to the target throttle opening degree.

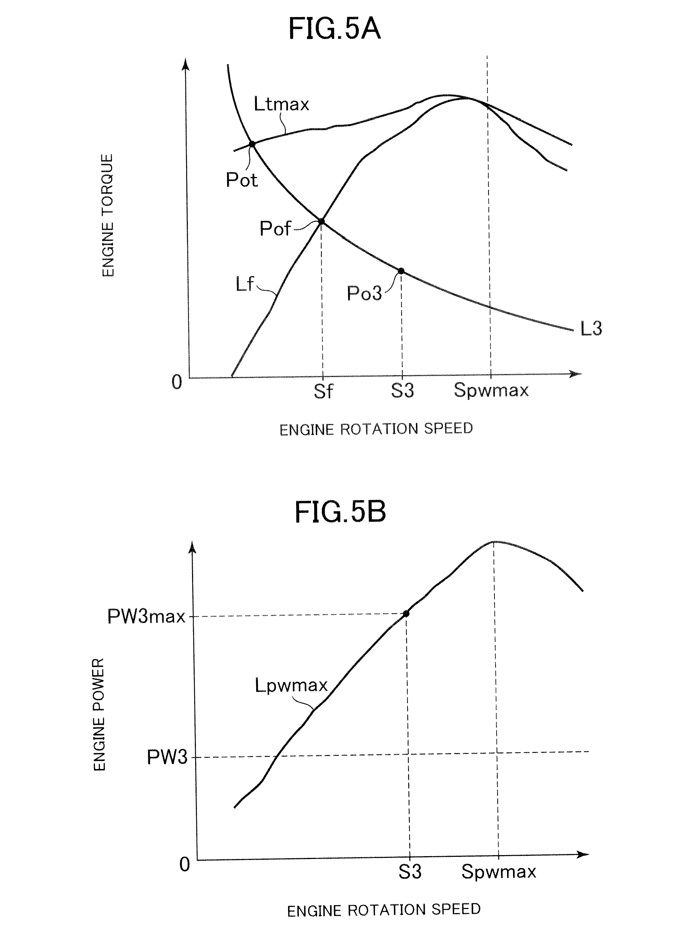

Hereinafter, processing by the target engine rotation speed calculation section 53 will be described. FIG. 5 explains an outline of processing by the target engine rotation speed calculation section 53. In the graph shown in FIG. 5 (a), the x-axis indicates the engine rotation speed, while the y-axis indicates the engine torque. In the graph, line L3 is an example of an equivalent power curve line indicating operation states where the target engine power can be obtained. Line Lf indicates operation states of the optimal fuel consumption (hereinafter referred to as an optimal fuel consumption curve line). Line Ltmax indicates the maximum engine torque that can be obtained at each engine rotation speed (hereinafter referred to as the maximum torque curve line). Meanwhile, in the graph shown in FIG. 5(b), the x-axis indicates the engine rotation speed, while the y-axis indicates the engine power. In the graph shown in FIG. 5(b), line Lpwmax indicates the maximum engine power that can be obtained at each engine rotation speed.

The drive control device 10 has, as its control modes, a fuel economy mode and an acceleration responsive mode. The drive control device 10 further has another control mode, that is, an intermediate mode where an operation state is achieved between one in the fuel economy mode and one in the acceleration responsive mode. These control modes are switched between one another by a driver operating a switch (not shown) mounted on, for example, the steering bar 6 or the like. Alternatively, the control mode may be automatically switched by the drive control device 10, depending on the drive state of the vehicle, without a switching operation by a driver.

In the fuel economy mode, the target engine rotation speed calculation section 53 calculates, as the target engine rotation speed, an engine rotation speed to achieve the optimal fuel consumption (hereinafter referred to as a fuel economy rotation speed) in the operation states (operation states on the equivalent power curve line L3 in FIG. 5) where the target engine power can be obtained In the example shown in FIG. 5, the engine rotation speed Sf at the cross point Pof between the equivalent power curve line L3 and the optimal fuel consumption curve line Lf is the fuel economy rotation speed, and set as the target engine rotation speed.

When the engine rotation speed Sf at the cross point Pof exceeds the range of the engine rotation speed that is defined by the upper and lower limits of the transmission ratio (that is, when the engine rotation speed Sf is lower than the engine rotation speed calculated from a product of the current vehicle speed times the minimum reduction ratio (the TOP reduction ratio)), the lowest engine rotation speed is set as the target engine rotation speed.

In the acceleration responsive mode, the target engine rotation speed calculation section 53 calculates, as the target engine rotation speed, an engine rotation speed of the optimal acceleration response (hereinafter referred to as a responsive rotation speed) in the operation states where the target engine power can be obtained.

In this embodiment, the acceleration response is defined as a capability corresponding to a rear wheel driving force that can be obtained immediately after an accelerative operation performed by a driver (an operation on the accelerator grip 6a). That is, acceleration response in a certain operation state is expressed as, for example, a ratio between the engine power at that operation state and the maximum engine power that can be obtained at an engine rotation speed same as that of that operation state. In FIG. 5, the acceleration response in the operation state Po3 is expressed as a ratio (PW3max/PW3) of the engine power PW3 in the operation state Po3 relative to the maximum engine power PW3max which can be obtained at the engine rotation speed S3 of that operation state Po3 (see FIG. 5 (b), hereinafter the ratio is referred to as a margin engine power ratio).

When a driver operates the accelerator grip 6a, it is possible to immediately increase the engine torque by increasing the throttle opening degree. However, it takes time to increase the engine rotation speed because it is necessary to move the movable sheave 31a. In this view, when the engine 20 is driven in advance so as to remain in an operation state with a large margin engine power ratio, a large engine power can be instantly obtained upon an accelerative operation performed, without waiting for an increase of the engine rotation speed. Consequently, it is possible to obtain a large rear wheel driving force instantly after an accelerative operation performed.

In the acceleration responsive mode, the target engine rotation speed calculation section 53 calculates, as the target engine rotation speed, an engine rotation speed of an operation state with the maximum margin engine power ratio among the operation states where the target engine power can be obtained. Therefore, when the range of the engine rotation speed defined by the upper and lower limits of the transmission ratio is disregarded, the margin engine power ratio is maximized at the engine rotation speed Spwmax (see FIG. 5 (b)) at which the maximum engine power is obtained. Therefore, the target engine rotation speed calculation section 53 sets the engine rotation speed Spwmax as the target engine rotation speed, basically.

When the engine rotation speed Spwmax exceeds the range of the engine rotation speed that is defined by the upper and lower limits of the transmission ratio (that is, (i) when the engine rotation speed Spwmax is higher than the engine rotation speed (the highest engine rotation speed) calculated from a product of the current vehicle speed times the maximum reduction ratio (a LOW reduction ratio) or (ii) when the engine rotation speed Spwmax is lower than the engine rotation speed (the lowest engine rotation speed) calculated from a product of the vehicle speed times the minimum reduction ratio (a TOP reduction ratio)), the target engine rotation speed calculation section 53 calculates the highest or lowest engine rotation speed as the target engine rotation speed.

In the intermediate mode, the target engine rotation speed calculation section 53 sets a target engine rotation speed between the target engine rotation speed set in the fuel economy mode (Sf in the example shown in FIG. 5) and the target engine rotation speed set in the acceleration responsive mode (Spwmax in the example shown in FIG. 5).

In this embodiment, the storage unit 59 has data stored therein which correlates each operation state of the engine 20 with an evaluation value (hereinafter referred to as a fuel consumption evaluation value) indicating a fuel consumption obtained at that operation state. In this example, the storage unit 59 has a map stored therein which correlates each engine rotation speed with the fuel consumption evaluation value indicating a fuel consumption obtained at that engine rotation speed. The target engine rotation speed calculation section 53 sets a target as to the fuel consumption value, and calculates the target engine rotation speed, based on the target, referring to the map stored in the storage unit 59.

In this embodiment, the target engine rotation speed calculation section 53 calculates a targeted fuel consumption evaluation value (hereinafter referred to as a target fuel consumption evaluation value) between a fuel consumption evaluation value indicating a fuel consumption in driving the engine 20 in the fuel economy mode (hereinafter referred to as a first limit evaluation value) and a fuel consumption evaluation value indicating a fuel consumption in driving the engine 20 in the acceleration responsive mode (hereinafter referred to as a second limit evaluation value). Then, with reference to the map stored in the storage unit 59, the target engine rotation speed calculation section 53 calculates, as the target engine rotation speed, an engine rotation speed correlated to the target fuel consumption evaluation value. With the above, it is possible to drive the engine 20 at a fuel consumption corresponding to the target fuel consumption evaluation value when the actual engine rotation speed reaches the target engine rotation speed.

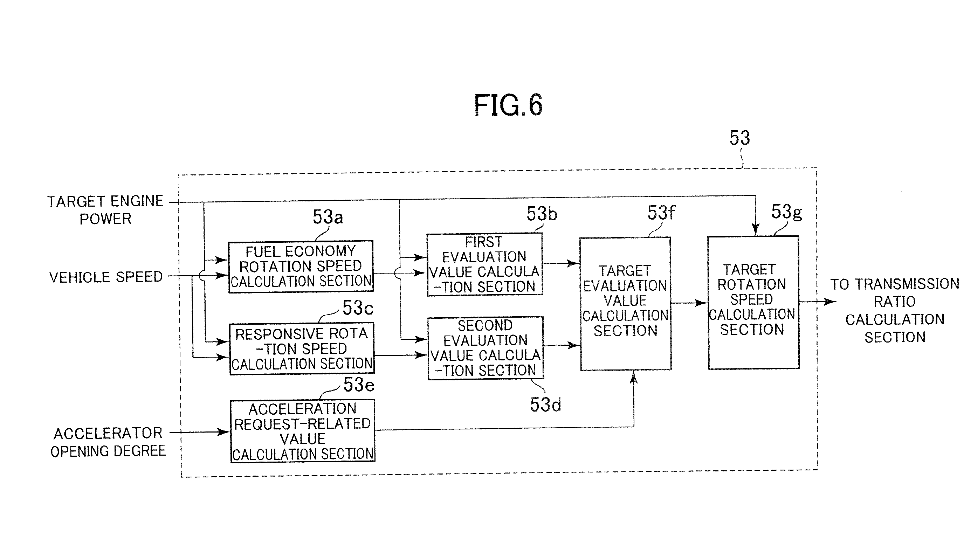

Hereinafter, processing executed by the target engine rotation speed calculation section 53 will be described. FIG. 6 is a block diagram showing a function of the target engine rotation speed calculation section 53. As shown in the diagram, the target engine rotation speed calculation section 53 includes a fuel economy rotation speed calculation section 53a, a first evaluation value calculation section 53b, a responsive rotation speed calculation section 53c, a second evaluation value calculation section 53d, an acceleration request-related value calculation section 53e, a target evaluation value calculation section 53f, and a target rotation speed calculation section 53g.

The fuel economy rotation speed calculation section 53a calculates the above described fuel economy rotation speed, based on the vehicle speed detected by the vehicle speed sensor 17 and the target engine power. The fuel economy rotation speed in this example is an engine rotation speed of the optimal fuel consumption in the range of the engine rotation speed defined by the upper and lower limits of the transmission ratio and the vehicle speed (that is, a range of the engine rotation speed allowed by changing the transmission ratio). In the storage unit 59, a map which correlates the fuel economy rotation speed, the vehicle speed, and the engine power (hereinafter referred to as an optimal fuel consumption map) is stored. With reference to the optimal fuel consumption map, the fuel economy rotation speed calculation section 53a calculates a fuel economy rotation speed correlated to the current vehicle speed and the target engine power.

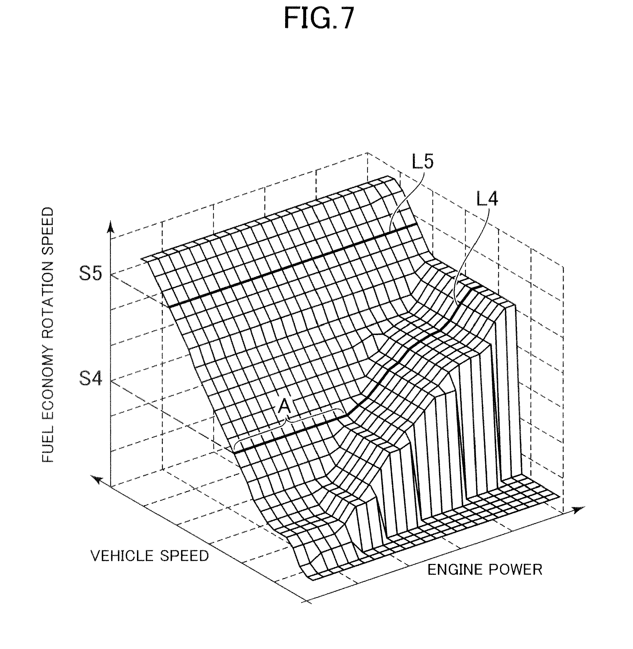

FIG. 7 shows an example of the optimal fuel consumption map. In this diagram, three respective axes indicate the engine power, the vehicle speed, and the fuel economy rotation speed.

When the range of the engine rotation speed allowed by changing the transmission ratio is disregarded, an engine rotation speed of the optimal fuel consumption increases as the engine power increases, generally. That is, an engine rotation speed of the optimal fuel consumption (hereinafter referred to as a provisional fuel economy rotation speed) increases throughout the entire range of the engine rotation speeds as an engine power increases. Basically, a provisional fuel economy rotation speed is set as the fuel economy rotation speed. That is, in an operation area where the provisional fuel economy rotation speed can be realized by changing the transmission ratio (an operation area which has a provisional fuel economy rotation speed higher than the lowest engine rotation speed), the provisional fuel economy rotation speed is set as the fuel economy rotation speed. Thus, in this operation area, as indicated by line L4 in FIG. 7, the fuel economy rotation speed increases as the engine power increases, while the vehicle speed remains constant.

The fuel economy rotation speed is defined in the optimal fuel consumption map within a range allowed by changing the transmission ratio. Thus, when the provisional fuel economy rotation speed is lower than the engine rotation speed allowed by changing the transmission ratio, that is, when the provisional fuel economy rotation speed is lower than the above-described lowest engine rotation speed, the lowest engine rotation speed is set as the fuel economy rotation speed. As indicated by line L5 and the range A of line L4 in FIG. 7, when the provisional fuel economy rotation speed is lower than the lowest engine rotation speed (for example, S5, S4), the lowest engine rotation speed is set as the fuel economy rotation speed.

As indicated by line L5, in the range where the lowest engine rotation speed is higher than the engine rotation speed Spwmax at which the maximum engine power can be obtained (see FIG. 5(b)), the lowest engine rotation speed is set as the fuel economy rotation speed with respect to all engine powers.

The first evaluation value calculation section 53b calculates the first limit evaluation value, based on the fuel economy rotation speed calculated by the fuel economy rotation speed calculation section 53a. In this example, a map which correlates the engine rotation speed, the engine power, and the fuel consumption evaluation value indicating a fuel consumption in driving the engine 20 (hereinafter referred to as a fuel consumption evaluation map) is stored in the storage unit 59. with reference to the fuel consumption evaluation map, the first evaluation value calculation section 53b calculates, as the first limit evaluation value, a fuel consumption evaluation value correlated to the calculated fuel economy rotation speed and target engine power.

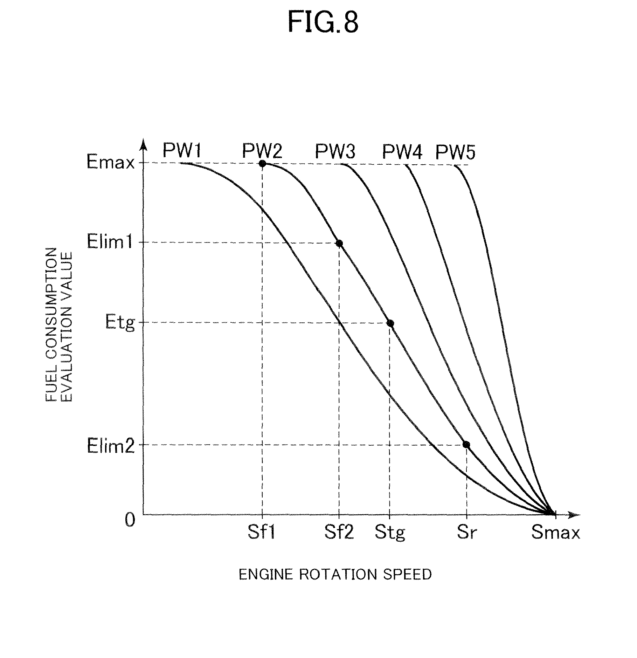

FIG. 8 explains the fuel consumption evaluation map, in which the x-axis indicates the engine rotation speed and the y-axis indicates the fuel consumption evaluation value. The line shown in the diagram indicates a relationship between the engine rotation speed and the fuel consumption evaluation value as to each of the engine powers PW1 to PW5 (PW1<PW2<...<PW5).

When the fuel consumption is defined as a distance which a vehicle can run by a unit fuel amount, generally, the fuel consumption decreases as the engine rotation speed increases. Thus, in the fuel consumption evaluation map, as shown in FIG. 8, the fuel consumption evaluation value decreases as the engine rotation speed increases, while the engine power remains constant.

In the fuel consumption evaluation map, the maximum fuel consumption evaluation value (Emax in the example shown in FIG. 8) is correlated to the provisional fuel economy rotation speed as to each engine power. Further, in the fuel consumption evaluation map, the minimum fuel consumption evaluation value (0 in FIG. 8) is correlated to an engine rotation speed of the worst fuel consumption as to each engine power (specifically, the maximum engine rotation speed Smax allowed by the engine 20). Thus, as shown in FIG. 8, when the target engine power is PW2 and the provisional fuel economy rotation speed Sf1 is calculated as the fuel economy rotation speed, the maximum fuel consumption evaluation value Emax is calculated as the first limit evaluation value. Meanwhile, when a lowest engine rotation speed Sf2 higher than the provisional fuel economy rotation speed Sf1 is calculated as the fuel economy rotation speed, a value Elim1 lower than the fuel consumption evaluation value Emax is calculated as the first limit evaluation value.

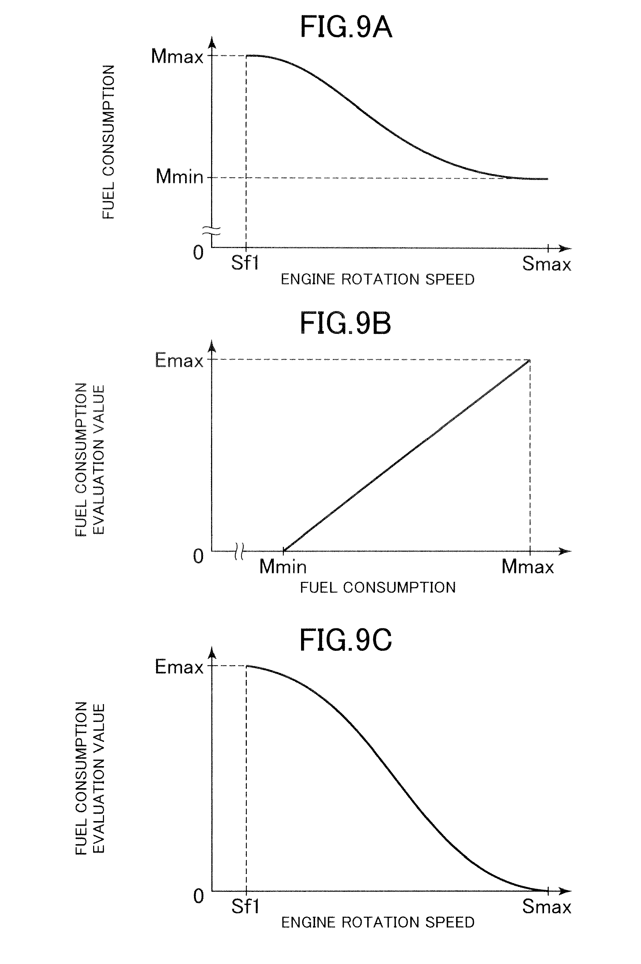

FIG. 9 is referred to explain a relationship between the fuel consumption evaluation value, the fuel consumption (km/liter), and the engine rotation speed when the engine power remains constant. FIG. 9 (a) is a graph schematically showing a relationship between the engine rotation speed and the fuel consumption; FIG. 9(b) is a graph schematically showing a relationship between the fuel consumption and the fuel consumption evaluation value; FIG. 9(c) is a graph schematically showing a relationship between the engine rotation speed and the fuel consumption evaluation value.

As shown in FIG. 9 (a), the fuel consumption takes the maximum value Mmax at the above described provisional fuel economy rotation speed Sf1. Generally, the fuel consumption decreases as the engine rotation speed increases from the provisional fuel economy rotation speed Sf1, and takes the minimum value Mmin at the maximum engine rotation speed Smax at which the engine 20 is allowed to drive.

As shown in FIG. 9 (b), the fuel consumption evaluation value is proportional to the fuel consumption and takes the maximum value EMAX at the maximum value Mmax of the fuel consumption and the minimum value (0 in the example shown in FIG. 9 (b)) at the minimum value Mmin of the fuel consumption. Thus, as shown in FIG. 9 (c), the fuel consumption evaluation value takes the maximum value Emax at the above described provisional fuel economy rotation speed Sf1. Similar to the fuel consumption, the fuel consumption evaluation value decreases as the engine rotation speed increases from the provisional fuel economy rotation speed Sf1, and takes the minimum value 0 at the maximum engine rotation speed Smax at which the engine 20 is allowed to drive.

The responsive rotation speed calculation section 53c calculates the above described responsive rotation speed, based on the vehicle speed detected by the vehicle speed sensor 17 and the target engine power calculated. The responsive rotation speed in this example is an engine rotation speed of the optimal acceleration response within the range of the engine rotation speed which is allowed by changing the transmission ratio. In the storage unit 59, a map for correlating the responsive rotation speed, the vehicle speed, and the engine power (hereinafter referred to as an optimal acceleration response map) is stored. With reference to the optimal acceleration response map, the responsive rotation speed calculation section 53c calculates the responsive rotation speed correlated to the detected vehicle speed and the target engine power.

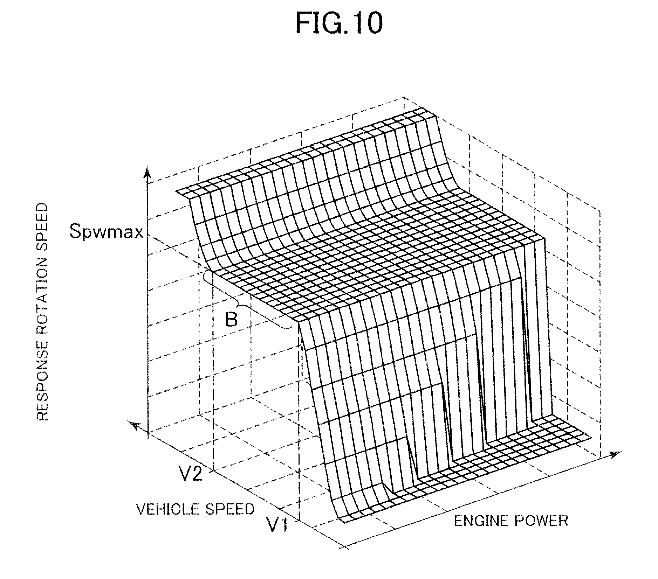

FIG. 10 shows an example of the optimal acceleration response map, in which the three axes indicate the engine power, the vehicle speed, and the responsive rotation speed, respectively.

As described in the above with reference to the graph in FIG. 5(b), when the range of the engine rotation speed defined by the upper and lower limits of the transmission ratio is disregarded, the acceleration response (the margin engine power ratio here) is optimized at the engine rotation speed Spwmax of the maximum engine power (hereinafter referred to as the maximum power engine rotation speed). Thus, in the optimal acceleration response map, the maximum power engine rotation speed Spwmax is set as the responsive rotation speed, as indicated by the range B in FIG. 10. That is, in an operation area having the maximum power engine rotation speed Spwmax included in the range of the engine rotation speed defined by the upper and lower limits of the transmission ratio and the vehicle speed, the maximum power engine rotation speed Spwmax is set as the responsive rotation speed.

The responsive rotation speed in the optimal acceleration response map is defined as to a range of the engine rotation speed that is defined by the upper and lower limits of the transmission ratio and the vehicle speed. Thus, when the maximum power engine rotation speed Spwmax. exceeds the range, either the maximum or minimum value of the range of the engine rotation speed is set as the responsive rotation speed. Specifically, in a speed range lower than the vehicle speed V1 in FIG. 10, the highest engine rotation speed obtained from a product of the vehicle speed times the maximum reduction ratio (the LOW reduction ratio) is lower than the maximum power engine rotation speed Spwmax. Thus, for this range, the highest engine rotation speed is set as the responsive rotation speed. Meanwhile, in a speed range higher than the vehicle speed V2 (V2>V1), the lowest engine rotation speed obtained from a product of the vehicle speed times the minimum reduction ratio (the TOP reduction ratio) is higher than the maximum power engine rotation speed Spwmax. Thus, for this range, the lowest engine rotation speed is set as the responsive rotation speed.

The second evaluation value calculation section 53d calculates the second limit evaluation value, based on the responsive rotation speed calculated by the responsive rotation speed calculation section 53c. In this example, as described above, since the fuel consumption evaluation map is stored in the storage unit 59, the second evaluation value calculation section 53d calculates the second limit evaluation value with reference to the fuel consumption evaluation map. For example, as shown in FIG. 8, when the target engine power is PW2 and the responsive rotation speed is Sr, the second evaluation value calculation section 53d calculates, as the second limit evaluation value, a fuel consumption evaluation value Elim2 correlated to the responsive rotation speed Sr and the target engine power PW2, with reference to the fuel consumption evaluation map.

The target engine rotation speed calculation section 53 calculates a target fuel consumption evaluation value between the first limit evaluation value and the second limit evaluation value, based on information related to an acceleration request by a driver. Prior to calculation of the target fuel consumption evaluation value, the acceleration request-related value calculation section 53e calculates an acceleration request-related value as information related to an acceleration request.

An acceleration request-related value reflects not only the current acceleration request but also the tendency of past acceleration requests. The acceleration request-related value calculation section 53e calculates an acceleration request-related value that changes as follows, based on an accelerator operation and so forth.

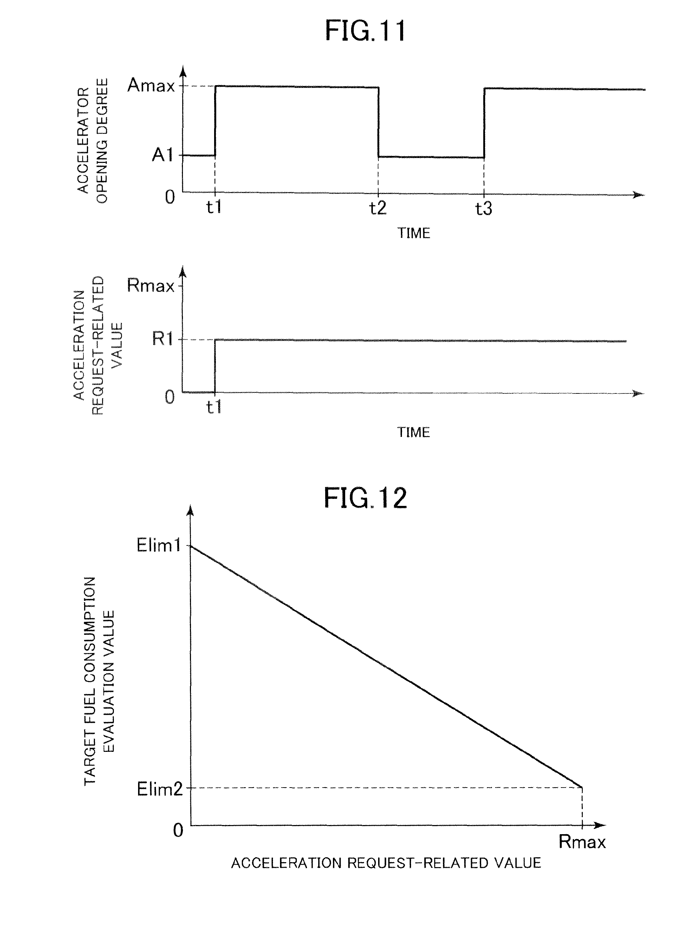

FIG. 11 is a time chart showing an example of change in the accelerator opening degree and the acceleration request-related value. In the diagram, the accelerator opening degree increases at t1 from A1 to the maximum value Amax. Thereafter, the accelerator opening degree decreases to return to A1 at t2, and further, increases again at t3 to Amax. Meanwhile, the acceleration request-related value increases from the minimum value (0 in FIG. 11) to R1 as the accelerator opening degree increases at t1 Thereafter, although the accelerator opening degree returns to A1 at t2, the accelerator request-related value remains at R1, not following the change of the accelerator opening degree. Further, when the accelerator opening degree returns to Amax at t3 as well, the acceleration request-related value remains at R1. As described above, the acceleration request-related value reflects the accelerator opening degree during a predetermined past period of time.

As a method for calculating such an acceleration request-related value, various methods are available. For example, different conditions are applied between when the acceleration request-related value is increasing and decreasing. That is, the acceleration request-related value calculation section 53e increases the acceleration request-related value in accordance with the change of the accelerator opening degree, when the change speed of the accelerator opening degree (hereinafter referred to as an accelerator operation speed) is equal to or larger than a predetermined threshold. Meanwhile, when the accelerator opening degree decreases, the acceleration request-related value calculation section 53e gradually decreases the acceleration request-related value in accordance with a lapse time after the accelerator opening degree starts decreasing.

Alternatively, the acceleration request-related value calculation section 53e may calculate the acceleration request-related value, based on the accelerator opening degree detected by the accelerator operation sensor 6b, the accelerator operation speed, and an integral value of the accelerator opening degree based on a time, and so forth. For example, the acceleration request-related value calculation section 53e may calculate the acceleration request-related value, using the sum of two or all of the average of the accelerator opening degrees within a predetermined period of time, the accelerator operation speed, an integral value of the accelerator opening degree based on a time.

The acceleration request-related value can be changed continuously or in a stepwise manner between, for example, the maximum value thereof Rmax and the minimum value (0 in FIG. 11). The acceleration request-related value calculated in this example becomes larger as an acceleration request increases (that is, a stronger acceleration request is made, an acceleration request is made more often, or an acceleration request continues for a longer period of time).

The target evaluation value calculation section 53f calculates a target fuel consumption evaluation value between the first limit evaluation value and the second limit evaluation value, based on the acceleration request-related value calculated by the acceleration request-related value calculation section 53e. The acceleration request-related value calculated in this example becomes larger as an acceleration request increases, as described above (that is, a stronger acceleration request is made, an acceleration request is made more often, or an acceleration request continues for a longer period of time). Then, the target evaluation value calculation section 53f shifts the target fuel consumption evaluation value from the first limit evaluation value corresponding to the fuel economy rotation speed toward the second limit evaluation value corresponding to the responsive rotation speed as the calculated acceleration request-related value becomes larger. With the above, the target fuel consumption evaluation value comes to the second limit evaluation value in accordance with an increase of the acceleration request, so that higher acceleration response can be obtained.

In this example, the target fuel consumption evaluation value calculated by the target evaluation value calculation section 53f corresponds to the acceleration request-related value. Specifically, the target fuel consumption evaluation value is proportional to the acceleration request-related value, of which upper limit is defined by either one of the first and second limit evaluation values and the lower limit by the other. In other words, the target evaluation value calculation section 53f calculates, as the target fuel consumption evaluation value, a value that divides the difference between the first and second limit evaluation value in proportion with the acceleration request-related value. For example, the target fuel consumption evaluation value is calculated using, for example, the calculation formula below.

$$Etg=((Elim1-Elim2)/(Rmax-Rmin)) \times (R-Rmin)+Elim2$$

wherein Etg is the target fuel consumption evaluation value, Elim1 is the first limit evaluation value, Elim2 is the second limit evaluation value, R is the acceleration request-related value, Rmax is the maximum value of the acceleration request-related value, and Rmin is the minimum value (for example, 0) of the acceleration request-related value.

FIG. 12 is referred to explain a relationship between the target fuel consumption evaluation value calculated using the above described calculation formula and the acceleration request-related value, wherein the x-axis indicates the acceleration request-related value, and the y-axis indicates the target fuel consumption evaluation value

As shown in FIG. 12, the target fuel consumption evaluation value calculated using the above-described calculation formula is proportional to the acceleration request-related value. When the acceleration request-related value takes the maximum value Rmax, the second limit evaluation value Elim2 is calculated as the target fuel consumption evaluation value, and when the acceleration request-related value takes the minimum value 0, the first limit evaluation value Elim1 is calculated as the target fuel consumption evaluation value.

The target rotation speed calculation section 53g calculates the target engine rotation speed, based on the target fuel consumption evaluation value. Specifically, with reference to the fuel consumption evaluation map, the target rotation speed calculation section 53g calculates a target engine rotation speed correlated to the target fuel consumption evaluation value. The fuel consumption evaluation map in this example correlates the fuel consumption evaluation value, the engine power, and the engine rotation speed, as described above. The target rotation speed calculation section 53g calculates, as the target engine rotation speed, an engine rotation speed correlated to the calculated target fuel consumption evaluation value and the target engine power, with reference to the fuel consumption evaluation map.

Referring to FIG. 8, when the target fuel consumption evaluation value is Etg (Elim2<Etg<Elim1) and the target engine power is PW2, an engine rotation speed Stg correlated to the target fuel consumption evaluation value and the target engine power is calculated as the target engine rotation speed. Since the target fuel consumption evaluation value Etg is a value between the first limit evaluation value (Elim1 or Emax in FIG. 8) and the second limit evaluation value Elim2, the calculated target engine rotation speed Stg is defined between the fuel economy rotation speed (Sf2 or Sf1 in FIG. 8) and the responsive rotation speed Sr.

The fuel consumption evaluation map used by the target rotation speed calculation section 53g may not necessarily coincide with that which is used by the above described first evaluation value calculation section 53b and the second evaluation value calculation section 53d. That is, two maps may be stored as the fuel consumption evaluation map in the storage unit 59. The fuel consumption evaluation map used by the first evaluation value calculation section 53b or the like is defined only as to an operation area used in calculation of the first limit evaluation value or the like, while the fuel consumption evaluation map used by the target rotation speed calculation section 53g may be defined only as to an operation area used in processing for calculating the target engine rotation speed.

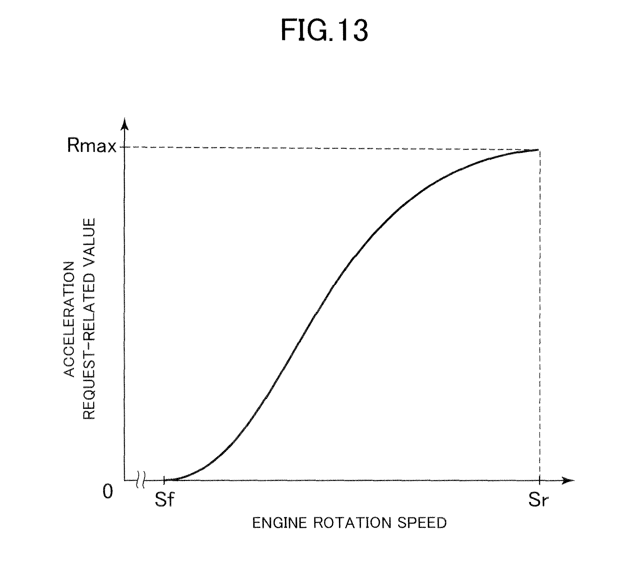

FIG. 13 schematically shows a relationship between the target engine rotation speed calculated as described above and the acceleration request-related value, in which the x-axis indicates the target engine rotation speed and the y-axis indicates the acceleration request-related value.

As shown in FIG. 12, the acceleration request-related value is proportional to the fuel consumption evaluation value, with the maximum value thereof corresponding to the second limit evaluation value, and the minimum value thereof (0 in FIG. 12) corresponding to the first limit evaluation value. Thus, as shown in FIG. 13, when the acceleration request-related value takes the maximum value Rmax, the acceleration responsive rotation speed (Sr in FIG. 13) is calculated as the target engine rotation speed. As the acceleration request-related value becomes smaller, the target engine rotation speed becomes lower, gradually becoming closer to the fuel economy rotation speed (Sf in FIG. 13). Then, when the acceleration request-related value takes the minimum value 0, the fuel economy rotation speed makes the target engine rotation speed.

When the fuel consumption evaluation value and the engine rotation speed have a relationship expressed by function Fe (E=Fe(S), E=fuel consumption evaluation value, S=engine rotation speed), Etg=Fe(Stg), Elim1=Fe(Sf), and Elim2=Fe(Sr), in which Etg is the target fuel consumption evaluation value, Stg is the target engine rotation speed, Elim1 is the first limit evaluation value, Elim2 is the second limit evaluation value, Sf is the fuel economy rotation speed, and Sr is the responsive rotation speed. As shown in FIG. 12, a relationship between the target fuel consumption evaluation value Etg and the acceleration request-related value R is expressed as

$$\mathtt{Etg=((Elim1-Elim2)/(Rmin-Rmax))X(R-Rmax)+Elim2}$$

Thus, the relationship between the target engine rotation speed and the acceleration request-related value shown in FIG. 13 is expressed by the following function Fr (R=Fr(Stg), wherein R=acceleration request-related value and Stg=target engine rotation speed):

$$\mathtt{Fr(Stg)=(Rmax-Rmin)/(Fe(Sr)-Fe(Sf))X(Fe(Stg)-Fe(Sf))+Rmin}$$

In particular, since the minimum value Rmin of the acceleration request-related value is 0 in FIG. 13, the following relational expression is held,

$$\mathtt{Fr(Stg)=Rmax/(Fe(Sr)-Fe(Sf))X(Fe(Stg)-Fe(Sf))}$$

In the intermediate mode, the target transmission ratio is calculated, based on the target engine rotation speed calculated as described above and the current vehicle speed. When the actual transmission ratio becomes equal to the target transmission ratio, the actual engine rotation speed coincides with the target engine rotation speed. In the above, the engine 20 is driven at a fuel consumption corresponding to the target fuel consumption evaluation value

When the target engine rotation speed calculation section 53 has the above described function, the target engine rotation speed is calculated as described below, for example, in the fuel economy mode and the acceleration responsive mode.

The fuel economy mode is for driving the engine 20 at the above-described fuel economy rotation speed. Thus, in the fuel economy mode, the target engine rotation speed calculation section 53 calculates, as the target engine rotation speed, the fuel economy rotation speed calculated by the fuel economy rotation speed calculation section 53a, without the processing by the first evaluation value calculation section 53b or the like. Meanwhile, the acceleration responsive mode is for driving the engine 20 at the above-described responsive rotation speed. Thus, in the acceleration responsive mode, the target engine rotation speed calculation section 53 calculates, as the target engine rotation speed, the responsive rotation speed calculated by the responsive rotation speed calculation section 53c, without the processing by the second evaluation value calculation section 53d or the like.

In the fuel economy mode, the acceleration responsive mode, and the intermediate mode, the respective sections of the target engine rotation speed calculation section 53 may execute the same processing with a parameter alone differing. That is, in the fuel economy mode, the minimum value of the acceleration request-related value may be calculated, and the target evaluation value calculation section 53f may execute processing similar to the above described processing, based on the calculated minimum value, to thereby calculate the target fuel consumption evaluation value. With the above, an engine rotation speed of the optimal fuel consumption, that is, the fuel economy rotation speed, is calculated as the target engine rotation speed among the engine rotation speeds which can produce the target engine power. Meanwhile, in the acceleration responsive mode, the maximum value of the acceleration request-related value may be calculated, and the target evaluation value calculation section 53f may execute processing similar to the above described processing, based on the calculated maximum value, to thereby calculate the target fuel consumption evaluation value. With the above, an engine rotation speed which can realize the optimal acceleration response, that is, the responsive rotation speed, is calculated as the target engine rotation speed.

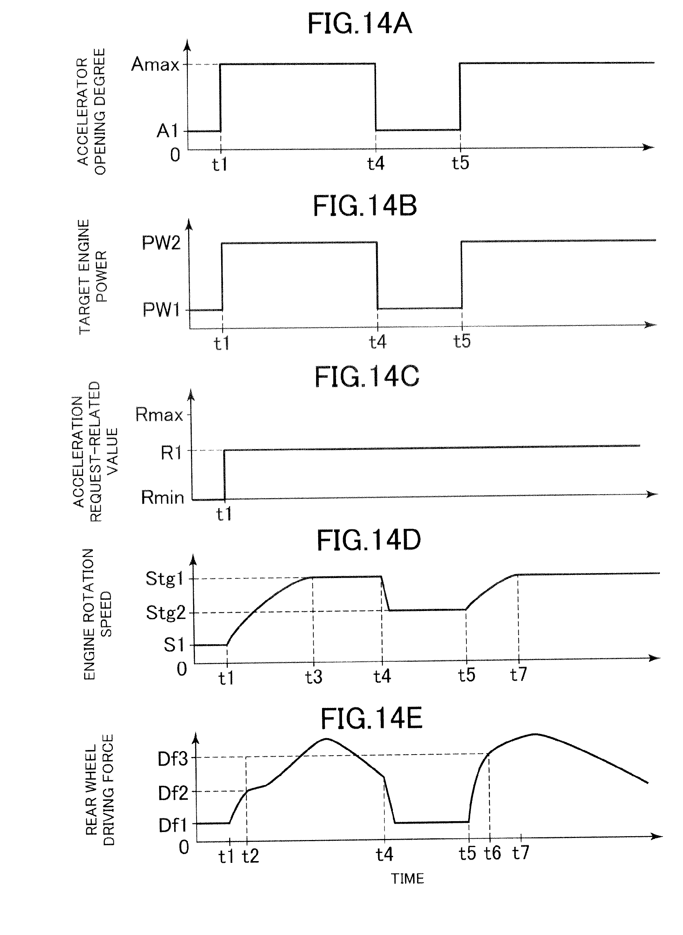

FIG. 14 is a time chart showing an example of change in the accelerator opening degree, the target engine power, the acceleration request-related value, the actual engine rotation speed, and the rear wheel driving force.

As shown in FIG. 14, in this description, the accelerator opening degree increases at t1 from A1 to the maximum value Amax. Thereafter, the accelerator opening degree decreases at t4 to return to A1, and then increases again at t5 from A1 to the maximum value Amax. meanwhile, the target engine power increases at t1 from PW1 to PW2, and thereafter decreases to PW1 at t4, following the above described change in the accelerator opening degree. Then, the target engine power increases again at t5 from PW1 to PW2. Before t1, the acceleration request-related value is set to the minimum value Rmin, and the engine 20 is driven in the above described fuel economy mode. As a result, before t1, the engine rotation speed remains at the fuel economy rotation speed S1 that is calculated based on the minimum value Rmin of the acceleration request-related value and the target engine power PW1. Under this assumption, the operation state of the engine 20 changes as follows, for example.

When the accelerator opening degree increases to the maximum value Amax, the engine rotation speed starts increasing from S1 toward the target engine rotation speed Stg1 that is newly set in accordance with an increase of the accelerator opening degree and target engine power (t1). In this example, the acceleration request-related value increases from the minimum value Rmin to R1, following the increase of the accelerator opening degree at t1 Thus, when the accelerator opening degree increases at t1, the target engine rotation speed Stg1 is set to a rotation speed calculated based on the acceleration request-related value R1 and the target engine power PW2, being higher than the engine rotation speed of the optimal fuel consumption, that is, the fuel economy rotation speed. As shown in FIG. 14, the actual engine rotation speed gradually increases toward the target engine rotation speed Stg1 to reach the target engine rotation speed Stg1 at t3.

Before the engine rotation speed reaches the target engine rotation speed Stg1, the engine torque instantly increases toward the target engine torque calculated based on the current engine rotation speed and the target engine power PW2. Thus, as shown in FIG. 14, the rear wheel driving force increases from Df1 to Df2 immediately after the increase of the accelerator opening degree (t2). Then, the rear wheel driving force gradually increases, following the increase of the engine rotation speed, and thereafter, gradually decreases due to the increase of the vehicle speed.

At t4, the accelerator opening degree and the target engine power return to A1 and PW1, respectively. However, in this description, the acceleration request-related value remains at R1. Thus, when the target engine power returns to PW1, the target engine rotation speed is set to the engine rotation speed Stg2 (that is, the rotation speed calculated based on the acceleration request-related value R1 and the target engine power PW1) that is higher than the fuel economy rotation speed correlated to the target engine power PW1. At t4, the engine rotation speed starts decreasing toward the rotation speed Stg2.

when the accelerator opening degree and the target engine power increase at t5, the engine rotation speed starts increasing gradually from Stg2 toward the target engine rotation speed (Stg1 here) calculated based on the acceleration request-related value R1 and the target engine power PW2. Then, the engine rotation speed reaches the target engine rotation speed Stg1 at t7.

In acceleration at t5 as well, the engine torque instantly increases toward the target engine torque calculated based on the current engine rotation speed and the target engine power PW2 before the engine rotation speed reaches the target engine rotation speed Stg1. Thus, the rear wheel driving force increases from Df1 to Df3 immediately after the increase of the accelerator opening degree (t6). As described above, immediately before the acceleration at t5, the engine rotation speed has been set higher than the fuel economy rotation speed, in other words, the rotation speed Stg2, which is close to the responsive rotation speed. Thus, the engine power obtained immediately after the acceleration at t5, that is, immediately after the increase of the accelerator opening degree and the target engine power at t5, is higher than the engine power obtained immediately after the acceleration at t1. As a result, a larger rear wheel driving force Df3 can be obtained immediately after the acceleration at t5 than the rear wheel driving force Df2 obtained immediately after the acceleration at t1, so that preferable acceleration response can be obtained.

In the above described embodiment of the present invention, data which correlates each engine rotation speed with the fuel consumption evaluation value indicating a fuel consumption in driving the engine 20 at that engine rotation speed (the fuel consumption evaluation map here) is stored in advance in the storage unit 59. Then, the target evaluation value calculation section 53f calculates a target fuel consumption evaluation value between the first limit evaluation value indicating a fuel consumption in driving the engine 20 in the fuel economy mode and the second limit evaluation value indicating a fuel consumption in driving the engine 20 in the acceleration responsive mode. Then, with reference to the data stored in the storage unit 59, the target engine rotation speed calculation section 53 calculates, as the target engine rotation speed, the engine rotation speed correlated to the target fuel consumption evaluation value. With the above, it is possible to drive the engine 20 at the fuel consumption corresponding to the target evaluation value when the actual engine rotation speed reaches the target engine rotation speed.

In another embodiment of the present invention, the evaluation value may not be a value indicating a fuel consumption, but a value indicating an acceleration response. In this embodiment, a map which correlates each engine rotation speed of the engine 20 with an evaluation value indicating an acceleration response in driving the engine 20 at that engine rotation speed (hereinafter referred to as a response evaluation value) is stored in the storage unit 59. Then, the target engine rotation speed calculation section 53 sets a target value of the response evaluation value, and calculates the target engine rotation speed, based on the target value.

In this embodiment, the first limit evaluation value is a response evaluation value indicating an acceleration response in driving the engine 20 in the fuel economy mode, and the second limit evaluation value is a response evaluation value indicating an acceleration response in driving the engine 20 in the acceleration responsive mode. The target engine rotation speed calculation section 53 calculates a target response evaluation value (hereinafter referred to as a target response evaluation value) between the first limit evaluation value and the second limit evaluation value, and then, with reference to the map stored in the storage unit 59, calculates, as the target engine rotation speed, an engine rotation speed correlated to the target response evaluation value. With the above, when the actual engine rotation speed reaches the target engine rotation speed, an acceleration response correlated to the target response evaluation value is obtained. In the following, processing of the target engine rotation speed calculation section 53 in this embodiment will be described in detail.

Respective functions and processing of the target engine rotation speed calculation section 53 in this embodiment are substantially the same as those in the above described embodiments, except for the processing by the first evaluation value calculation section 53b, the second evaluation value calculation section 53d, and the target rotation speed calculation section 53g.

In this embodiment, a map which correlates each engine rotation speed, each engine power, and the response evaluation value indicating an acceleration response in driving the engine 20 at that engine rotation speed and that engine power (hereinafter referred to as an acceleration response evaluation map) is stored in the storage unit 59. With reference to the acceleration response evaluation map, the first evaluation value calculation section 53b and the second evaluation value calculation section 53d calculate the first limit evaluation value and the second limit evaluation value, respectively.

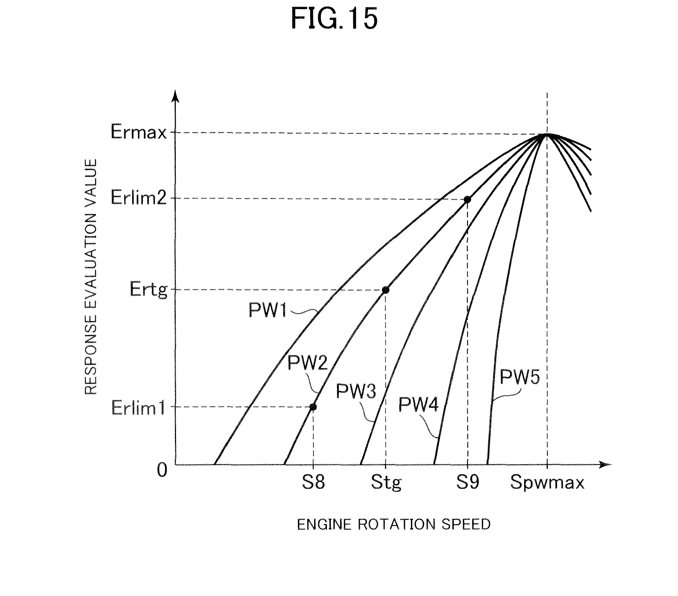

FIG. 15 explains the acceleration response evaluation map, wherein the x-axis indicates the engine rotation speed, and the y-axis indicates the response evaluation value. This diagram further shows a relationship between the engine rotation speed and the response evaluation value as to the respective engine powers PW1 to PW5 (PW1<PW2<...<PW5.

As described above, the acceleration response is maximized at the maximum power engine rotation speed Spwmax that achieves the maximum engine power PWmax (see FIG. 5(b)). Thus, as shown in FIG. 15, the response evaluation value takes the maximum value Ermax at the maximum power engine rotation speed Spwmax. As the engine rotation speed departs larger from the maximum power engine rotation speed Spwmax, the response evaluation value becomes smaller. Then, the response evaluation value takes the minimum value (0 in FIG. 15) at an engine rotation speed of the smallest acceleration response at each engine rotation speed.

The acceleration response in a certain operation state is a ratio of an engine power in that operation state relative to the maximum engine power that can be obtained at an engine rotation speed of that operation state (PW3max/PW3 in FIG. 5(b)), as described above. Then, when the engine power is supposed to remain constant, the acceleration response is minimized at the rotation speed at a cross point between the equivalent power curve line indicative of the engine power (for example, line L3 in FIG. 5 (a)) and the maximum torque curve line Ltmax (point Pot in FIG. 5) . Thus, the response evaluation value is minimized at the engine rotation speed at the cross point.

In this embodiment, with reference to the acceleration response evaluation map, the first evaluation value calculation section 53b calculates the first limit evaluation value, based on the fuel economy rotation speed calculated by the fuel economy rotation speed calculation section 53a. As shown in FIG. 15, for example, supposing that the calculated fuel economy rotation speed and target engine power are S8 and PW2, respectively, the first evaluation value calculation section 53b calculates, as the first limit evaluation value, the response evaluation value Erlim1 correlated to the fuel economy rotation speed S8 and the target engine power PW2.

Further, with reference to the acceleration response evaluation map, the second evaluation value calculation section 53d calculates the second limit evaluation value, based on the responsive rotation speed calculated by the responsive rotation speed calculation section 53c. As shown in FIG. 15, for example, supposing that the calculated responsive rotation speed and the target engine power are S9 and PW2, respectively, the second evaluation value calculation section 53d calculates, as the second limit evaluation value, the response evaluation value Erlim2 correlated to the responsive rotation speed S9 and the target engine power PW2.

As described above, the responsive rotation speed optimizes the acceleration response within the range of the engine rotation speed that is allowed by changing the transmission ratio. Thus, when the maximum power engine rotation speed Spwmax is included in that range, the maximum value Ermax of the response evaluation value is calculated as the second limit evaluation value. Meanwhile, when the maximum power engine rotation speed Spwmax exceeds the range, a response evaluation value correlated to the engine rotation speed at the upper or lower limit of the range is calculated as the second limit evaluation value.

In this embodiment as well, the target evaluation value calculation section 53f calculates a targeted response evaluation value (that is, the target response evaluation value) between the first limit evaluation value and the second limit evaluation value, based on the acceleration request-related value. Specifically, similar to the above described embodiment, the target evaluation value calculation section 53f calculates, as the target response evaluation value, a value that divides the difference between the first limit evaluation value and the second limit evaluation value in a proportion in accordance with the acceleration request-related value. The target evaluation value calculation section 53f calculates the target response evaluation value, using, for example, the calculation formula below.

$$Ertg=((Erlim2-Erlim1)/(Rmax-Rmin)) \times (R-Rmin)+Erlim1$$

wherein Ertg is the target response evaluation value, Erlim1 is the first limit evaluation value in this embodiment, Erlim2 is the second limit evaluation value in this embodiment, R is the acceleration request-related value, Rmax is the maximum value of the acceleration request-related value, and Rmin is the minimum value of the acceleration request-related value. Use of such an calculation formula can make the target response evaluation value be proportional to the acceleration request-related value and become closer to the second limit evaluation value as the acceleration request-related value becomes closer to the maximum value thereof.

In this embodiment as well, a larger acceleration request-related value is calculated as the acceleration request increases. As a result, the target response evaluation value becomes closer to the second limit evaluation value correlated to the responsive rotation speed as the acceleration request increases, so that higher acceleration response can be obtained.

With reference to the acceleration response evaluation map, the target rotation speed calculation section 53g calculates the target engine rotation speed, based on the target response evaluation value. That is, with reference to the acceleration response evaluation map, the target rotation speed calculation section 53g calculates, as the target engine rotation speed, the rotation speed correlated to the target response evaluation value and the target engine power. With reference to FIG. 15, supposing that the target response evaluation value and the target engine power are Ertg (Erlim1<Ertg<Erlim2) and PW2, respectively, the target rotation speed calculation section 53g calculates, as the target engine rotation speed, the engine rotation speed Stg correlated to the target response evaluation value Ertg and the target engine power PW2.

The acceleration response evaluation map used by the target rotation speed calculation section 53g may differ from the acceleration response evaluation map used by the first evaluation value calculation section 53b and the second evaluation value calculation section 53d. That is, mutually different two acceleration response evaluation maps may be stored in the storage unit 59. Then, the acceleration response evaluation map used by the first evaluation value calculation section 53b or the like may be defined only as to an operation area used in the processing for calculating the first limit evaluation value or the like, while the acceleration response evaluation map used in the target rotation speed calculation section 53g may be defined only as to an operation area used in the processing for calculating the target engine rotation speed. For example, as shown in FIG. 15, the acceleration response evaluation map used by the first evaluation value calculation section 53b or the like is defined also as to an engine rotation speed higher than the maximum power engine rotation speed Spwmax. However, the acceleration response evaluation map used by the target rotation speed calculation section 53g may be defined only as to a range lower than the maximum power engine rotation speed Spwmax.

In another embodiment of the above described present invention, data (an acceleration response evaluation map here) which correlates each engine rotation speed with a response evaluation value indicating an acceleration response in driving the engine 20 at that engine rotation speed is stored in advance in the storage unit 59. Then, the target evaluation value calculation section 53f calculates a targeted response evaluation value (that is, a target response evaluation value) between the first limit evaluation value indicating an acceleration response in driving the engine 20 in the fuel economy mode and the second limit evaluation value indicating an acceleration response in driving the engine 20 in the acceleration responsive mode. Witch reference to the data stored in the storage unit 59, the target engine rotation speed calculation section 53 calculates, as the target engine rotation speed, an engine rotation speed correlated to the target response evaluation value. With the above, when the actual engine rotation speed becomes equal to the target engine rotation speed, it is possible to obtain an acceleration response correlated to the target response evaluation value.

In the above described two embodiments, the target evaluation value calculation section 53f calculates the target fuel consumption evaluation value or the target response evaluation value, based on information related to an acceleration request by a driver (an acceleration request-related value in the above description). With the above, it is possible to drive the engine 20 at a fuel consumption or an acceleration response in accordance with an acceleration request by a driver.

In the above described two embodiments, the acceleration request-related value is calculated, based on an accelerative operation by a driver. With the above, it is possible to obtain a fuel consumption and an acceleration response in accordance with an accelerator operation.

In the above described two embodiments, the target evaluation value calculation section 53f shifts the target fuel consumption evaluation value or the target response evaluation value from the first limit evaluation value toward the second limit evaluation value in accordance with increase of an acceleration request by a driver. With the above, it is possible to obtain higher acceleration response when an acceleration request by a driver increases.

In the above described two embodiments, the acceleration request-related value is calculated as information related to an acceleration request by a driver, and the target fuel consumption evaluation value and the target response evaluation value take values in proportion to the acceleration request-related value. With the above, it is possible to obtain a fuel consumption and an acceleration response in accordance with the acceleration request-related value.

In the above described two embodiments, the drive control device 10 includes the fuel economy rotation speed calculation section 53a which calculates an engine rotation speed at which the engine 20 is set in the fuel economy mode (that is, the fuel economy rotation speed) and the first evaluation value calculation section 53b which calculates the first limit evaluation value, based on the fuel economy rotation speed. With the above, compared to a case in which neither the fuel economy rotation speed nor the first limit evaluation value is calculated in calculation of the target engine rotation speed (for example, when the target evaluation value is calculated directly from the accelerator opening degree, the vehicle speed, and the target engine power, using an calculation formula), the target engine rotation speed can be calculated in simpler processing.

In the above described two embodiments, the drive control device 10 includes the responsive rotation speed calculation section 53c which calculates an engine rotation speed (that is, responsive rotation speed) at which the engine 20 is set in the acceleration responsive mode and the second evaluation value calculation section 53d which calculates the second limit evaluation value, based on the responsive rotation speed. With the above, compared to a case in which neither the responsive rotation speed nor the second limit evaluation value is calculated in calculation of the target engine rotation speed (for example, when the target evaluation value is calculated directly from the accelerator opening degree, the vehicle speed, and the target engine power, using an calculation formula), the target engine rotation speed can be calculated in simpler processing.

Note that the present invention is not limited to the above described above two embodiments, and various modifications are possible.

For example, in the above description, a map is stored in the storage unit 59 as data which correlates the engine rotation speed with the fuel consumption evaluation value or the response evaluation value. However, instead of a map, a relational formula which correlates the engine rotation speed and the fuel consumption evaluation value or the response evaluation value may be stored in the storage unit 59.

In the above description, the acceleration request-related value is calculated, based on an accelerator operation. However, the acceleration request-related value may be manually input by a driver. For example, a switch for a driver's operation may be mounted on the steering bar 6 or the like, so that the acceleration request-related value calculation section 53e makes a value in accordance with an output signal from the switch as the acceleration request-related value. Further, the acceleration request-related value calculation section 53e may calculate the acceleration request-related value, based on a vehicle acceleration and frequency of acceleration made during a predetermined period of time.

Although the first limit evaluation value and the second evaluation value are calculated in calculation of the target engine rotation speed in the above description, the first limit evaluation value and the second limit evaluation value may not be calculated in calculation of the target engine rotation speed. For example, a targeted evaluation value may be calculated directly from the acceleration request-related value, the vehicle speed, and the target engine power, using an calculation formula, as long as the thus calculated target evaluation value resultantly becomes a value between the first limit evaluation value and the second limit evaluation value.

**Claims**

1. A drive control device for a vehicle, for controlling an engine and a transmission ratio of a continuously variable transmission so that an operation state of the engine becomes a target operation state, comprising:

    a storage unit storing in advance data which correlates each operation state of the engine with an evaluation value indicating a fuel consumption in driving the engine at each operation state;
    a target evaluation value calculation section which calculates a targeted evaluation value between a first evaluation value indicating a fuel consumption in driving the engine in a fuel economy mode that is one of control modes of the drive control device and a second evaluation value indicating a fuel consumption in driving the engine in an acceleration responsive mode that is another control mode; and
    a target operation state calculation section which calculates, as the target operation state, an operation state correlated to the targeted evaluation value, referring to the data stored in the storage unit.

2. A drive control device for a vehicle, for controlling an engine and a transmission ratio of a continuously variable transmission so that an operation state of the engine becomes a target operation state, comprising:

    a storage unit storing in advance data which correlates each operation state of the engine with an evaluation value indicating an acceleration response in driving the engine at each operation state;
    a target evaluation value calculation section which calculates a targeted evaluation value between a first evaluation value indicating an acceleration response in driving the engine in a fuel economy mode that is one of control mode of the drive control device and a second evaluation value indicating an acceleration response in driving the engine in an acceleration responsive mode that is another control mode; and
    a target operation state calculation section which calculates, as the target operation state, an operation state correlated to the targeted evaluation value, referring to the data stored in the storage unit.

3. The drive control device for a vehicle according to claim 1 or 2, wherein the target evaluation value calculation section calculates the targeted evaluation value, based on information related to an acceleration request by a driver.

4. The drive control device for a vehicle according to claim 3, wherein the information related to an acceleration request by a driver is obtained, based on an operation of an accelerator by the driver.

5. The drive control device for a vehicle according to claim 3 , wherein the target evaluation value calculation section changes the targeted evaluation value from the first evaluation value toward the second evaluation value when the acceleration request by the driver increases.

6. The drive control device for a vehicle according to claim 5, wherein
    an acceleration request-related value is calculated as the information related to the acceleration request by the driver, and
    the targeted evaluation value is proportional to the acceleration request-related value.

7. The drive control device for a vehicle according to claim 1 or 2, further comprising:

    a first operation state calculation section which calculates an operation state at which the engine driven in the fuel economy mode is set, and
    a first evaluation value calculation section which calculates the first evaluation value, based on the operation state calculated by the first operation state calculation section.

8. The drive control device for a vehicle according to claim 1 or 2, further comprising:

    a second operation state calculation section which calculates an operation state at which the engine driven in the acceleration responsive mode is set, and
    a second evaluation value calculation section which calculates the second evaluation value, based on the operation state calculated by the second operation state calculation section.

9. A vehicle including the drive control device according to claim 1 or 2.

# FIG.1

EP 2 602 463 A1

# FIG.2

# FIG.3

EP 2 602 463 A1

# FIG.4

# FIG.5A

# FIG.5B

# FIG.6

EP 2 602 463 A1

# FIG.7

# FIG.8

## FIG.9A

FUEL CONSUMPTION

Mmax

Mmin

0

Sf1    Smax

ENGINE ROTATION SPEED

## FIG.9B

FUEL CONSUMPTION EVALUATION VALUE

Emax

0

Mmin    Mmax

FUEL CONSUMPTION

## FIG.9C

FUEL CONSUMPTION EVALUATION VALUE

Emax

0

Sf1    Smax

ENGINE ROTATION SPEED

# FIG.10

# FIG.11

# FIG.12

# FIG.13

# FIG.14A

# FIG.14B

# FIG.14C

# FIG.14D

# FIG.14E

# FIG.15

**INTERNATIONAL SEARCH REPORT**

| International application No. |
| --- |
| PCT/JP2011/058884 |

A. CLASSIFICATION OF SUBJECT MATTER
*F02D41/14*(2006.01)i, *F02D29/00*(2006.01)i, *F02D41/04*(2006.01)i, *F16H61/02* (2006.01)i, *F16H61/662*(2006.01)i, *F16H63/50*(2006.01)i

According to International Patent Classification (IPC) or to both national classification and IPC

B. FIELDS SEARCHED

Minimum documentation searched (classification system followed by classification symbols)
F02D41/14, F02D29/00, F02D41/04, F16H61/02, F16H61/662, F16H63/50

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 3-204468 A  (Aisin AW Co., Ltd.), 06 September 1991 (06.09.1991), entire text; all drawings (Family: none) | 1-9 |
| A | JP 4-145261 A  (Japan Electronic Control Systems Co., Ltd.), 19 May 1992 (19.05.1992), entire text; all drawings (Family: none) | 1-9 |
| A | JP 10-329586 A  (Yamaha Motor Co., Ltd.), 15 December 1998 (15.12.1998), entire text; all drawings (Family: none) | 1-9 |

☐  Further documents are listed in the continuation of Box C.          ☐  See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | |
| "O"  document referring to an oral disclosure, use, exhibition or other means | "Y"  document of particular relevance; the claimed invention cannot be considered to involve an inventive step when the document is combined with one or more other such documents, such combination being obvious to a person skilled in the art |
| "P"  document published prior to the international filing date but later than the priority date claimed | "&"  document member of the same patent family |

| Date of the actual completion of the international search | Date of mailing of the international search report |
| --- | --- |
| 25 April, 2011 (25.04.11) | 17 May, 2011 (17.05.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2898034 B